# EUROPÄISCHE PATENTANMELDUNG

(11) **EP 0 602 511 A1**
(43) Veröffentlichungstag der Anmeldung: **22.06.1994**
(21) Anmeldenummer: 93119723.0
(22) Anmeldetag: 07.12.1993
(51) Int. Cl.: B65D 77/20, A21B 3/13

(54) **Umhüllung für Fleischfabrikate sowie durch diese Umhüllungen geformte Fleischfabrikate**

(30) Priorität: 12.12.1992 DE 4241980
(71) Anmelder: Neumann, Wolfgang, D-35781 Weilburg (DE)
(72) Erfinder: Neumann, Wolfgang, D-35781 Weilburg (DE)
(74) Vertreter: Meier, Robert, Dipl.-Ing.

(57) **Zusammenfassung**

Eine Umhüllung für ohne Konservierung leicht verderbliche Fleischfabrikate wie Füllungen für Brüh- oder Siedewürste bzw. Brät oder Fleisch- bzw. Leberkäse ist so ausgebildet, daß sie als um einen zentralen Durchlaß 13 herum angeordnete ringförmige Wanne mit einem entsprechend geformten Deckel 17 mit einer Zentralöffnung 18 ausgebildet ist, und daß der Deckel 17 mit den oberen Rändern 8, 11 der Wände 7, 10 der ringförmigen Wanne 1, 3, 4, 5 dicht verbunden ist.

## Beschreibung

Zum Konservieren von Fleisch bzw. Fleischfabrikaten ist es bekannt , diese zu pökeln, zu trocknen, zu räuchern, in Konservendosen einzuschließen bzw. einzufrieren.

Diese Konservierungsmethoden sind jedoch nur für bestimmte Fleischarten geeignet. Nicht anwendbar sind sie beispielsweise auf leicht verderbliche Fleischfabrikate wie Füllungen für Brüh- oder Siedewürste bzw. Brät oder auch Fleischkäse bzw. Leberkäse. Ohne Konservierungsmittel ist die Aufbewahrungszeit dieser Fleischwaren recht kurz.

Üblicherweise werden diese Fleischfabrikate vorbereitet und verzehrfertig. z. B. als Wurst in Natur- oder Kunstdärme gepreßt. Bekannt ist es, daß selbst bei einer Lagerung im Kühlschrank die Naturdarmpelle auch unangeschnittener Würste schnell schleimig wird, was andeutet, daß die Wurst über kurz oder lang für den menschlichen Verzehr nicht mehr geeignet ist.

Hinzu kommt, daß Naturdarmpellen für Brät oder z.B. Rindswürste recht hart sind. Zwar lassen sich diese Würste leicht von der harten Pelle befreien, jedoch kommt es immer wieder vor, daß die Pelle mitgegessen wird und dann Magenbeschwerden verursacht.

Eine andere Möglichkeit der Konservierung ist es, beispielsweise Fleisch- oder Leberkäse in Kunststoff-Folie einzuschließen, um sie gekühlt aufzubewahren. Von dieser größeren Menge werden dann Portionsscheiben abgetrennt. Nachteilig ist, daß die so konservierte Menge des Fleischfabrikates recht groß ist und sich nicht auf einmal verbrauchen läßt. Der jeweilige Rest wird wieder in den Kühlschrank zurückgelegt.

Hinzu kommt, daß zum Garen derartiger Mengen von Brät bzw. Leber- bzw. Fleischkäse eine relativ hohe Wärmemenge für eine relaltiv lange Zeit benötigt wird. Je größer die zu garende Fleischmenge ist, umso sorgfältiger muß darauf geachtet werden, daß sie vollständig gegart wird. zwar gibt es scheibenweise abgepacktes Brät bzw. scheibenweise abgepackten Fleisch- oder Leberkäse, jedoch stammen diese Scheiben von einer vorher gegarton und zum Verzehr geeigneten Menge Fleischfabrikat.

Demgegenüber liegt der Erfindung die Aufgabe zugrunde, eine Möglichkeit zu schaffen, mit der sich Fleischprodukte, die ohne Konservierung leicht verderben, wie Füllungen für Siede- oder Brühwürste, bzw. Brät oder Fleisch- bzw. Leberkäse mit geringerem Aufwand garen und im gegarten Zustand ohne Kühlung für eine optimale Zeitspanne bis zum Verzehr lagern läßt.

Gelöst wird diese Aufgabe durch eine Umhüllung, die als um einen zentralen Durchlaß herum angeordnete ringförmige Wanne mit einem entsprechend geformten Deckel mit einer Zentralöffnung ausgebildet ist, und bei der der Deckel mit den oberen Rändern der Wände der ringförmigen Wanne dicht verbunden ist. In diese Wanne wird das Brät oder das Fleischfabrikat hineingegeben. Nach dem Befestigen des Deckels wird dann die Umhüllung mit Inhalt einer Garungstemperatur ausgesetzt. Dabei verfestigt sich das Fleischfabrikat, beispielsweise die Füllung für eine Brüh- oder Siedewurst bzw. das Brät oder der Fleisch- bzw. Leberkäse. Wird die Umhüllung mit ihrem Inhalt gekühlt, ist sie etliche Monate haltbar, ungekühlt dagegen wenige Monate. Von Vorteil ist, wenn die Umhüllung so groß ist, daß sie zwei bzw. vier bzw. sechs oder auch mehr Portionen aufnehmen kann.

Weiterbildungen der Umhüllung ergeben sich aus den Ansprüchen 2 bis 18. Das in der Umhüllung gegarte und gelagerte Fleischfabrikat ist gemäß Anspruch 19 als Ring um eine zentrale Durchlaßöffnung herum ausgebildet. Durch diese Formgebung der Umhüllung und der dadurch bedingten Form des Fleischfabrikates ist es möglich, daß die Wärme für die Garung nicht nur von außen, sondern auch durch den zentralen Durchlaß dem Fleischfabrikat zugeführt werden kann. Hierdurch verringert sich die für die Garung benötigte Zeit gegenüber der gleichen Fleischfabrikatsmenge, die beispielsweise als kompakte Masse zur Garung angeliefert wird.

Durch die in den Ansprüchen 2 bis 18 gekennzeichneten Maßnahmen kann erreicht werden, daß das geformte Fleischfabrikat im gegarten Zustand gemäß der Ansprüche 19 bis 23 ausgebildet ist.

Die lange Haltbarkeit des Inhaltes der Umhüllung im gegarten Zustand ergibt sich aus dem luftdichten Verschluß infolge der besonderen Ausbildung der Umhüllung mit streifenförmigen Ansätzen an der ringförmigen Wanne und entsprechenden streifenförmigen Bereichen am Deckel, die je nach Material aus dem die Wanne und der Deckel bestehen, zusammengeklebt, miteinander verschweißt oder mechanisch miteinander verbunden werden können.

Zum leichten Öffnen der Umhüllung kann zwischen den streifenförmigen Bereichen und den streifenförmigen Ansätzen ein Aufreißband angeordnet werden.

Die Größe der Umhüllungen kann so bemessen werden, daß sie Fleischfabrikate für zwei, vier bzw. sechs oder mehr normale Portionen aufnehmen können. Insbesondere das gugelhupfförmige Brät läßt sich dabei in ästhetisch besonders ansprechende Scheiben aufscheiden und servieren.

Die Umhüllungen lassen sich durch Querwände unterteilen, durch die die Befüllung portionsweise unterteilt wird und zugleich der Umhüllung eine besondere Stabilität gegeben werden kann.

Ausführungsbeispiele der Erfindung werden nachfolgend anhand der Zeichnung erläutert. Es zeigt:
- Fig. 1: ein erstes Ausführungsbeispiel der Umhüllung,
- Fig. 2: ein zweites Ausführungsbeispiel der Umhüllung,
- Fig. 3: ein bevorzugtes Ausführungsbeispiel der Umhüllung,
- Fig. 4: ein weiteres Ausführungsbeispiel der Umhüllung,
- Fig. 5: Konstruktionsdetails der Verbindung zwischen Umhüllung und ihrem Deckel,
- Fig. 6: ein mittels eines Ausführungsbeispieles der Erfindung geformtes Fleischfabrikat,
- Fig. 7: ein durch ein weiteres Ausführungsbeispiel der Umhüllung geformtes Fleischfabrikat,
- Fig. 8: ein bevorzugtes Ausführungsbeispiel eines nach der Erfindung geformten Fleischfabrikates und
- Fig. 9: ein weiteres Ausführungsbeispiel der Erfindung.

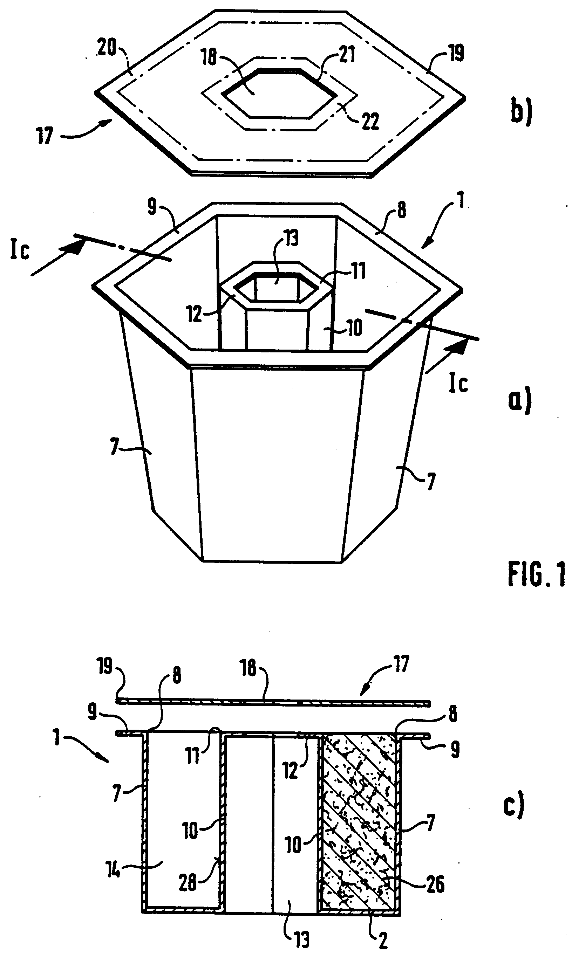

Fig. 1 zeigt ein erstes Ausführungsbeispiel der Erfindung mit einer ringförmigen vieleckigen Wanne 1 mit einem ebenen Boden 2. Die vieleckige ringförmige Wanne 1 ist in Fig. 1a perspektivisch dargestellt. Fig. 1b zeigt einen passenden vieleckigen Deckel 17, wohingegen Fig. 1c die ringförmige vieleckige Wanne 1 mit Dekkel 17 im Querschnitt entlang der Linie Ic/Ic in Fig. 1a zeigt. Die ringförmige vieleckige Wanne 1 mit dem ebenen Boden 2 ist achteckig dargestellt. Ohne am Kern der Erfindung etwas zu ändern, kann auch jeder andere vieleckige Grundriß einer ringförmigen Wanne zum Einsatz kommen.

Die ringförmige vieleckige Wanne 1 weist einen zentralen Durchlaß 13 auf, der normalerweise die gleiche vieleckige Umrißform hat wie die Wanne 1. Diese besitzt eine Außenwand 7 mit einem oberen Rand 8 an der streifenförmige Ansätze 9 vorgesehen sind, deren Bedeutung später erläutert wird.

Der zentrale Durchlaß 13 wird durch eine Innenwand 10 begrenzt, deren Flächen parallel zu den entsprechenden Flächen der Außenwand 7 verlaufen, und an derem oberen Rand 11 streifenförmige Ansätze 12 vorgesehen sind, die in den zentralen Durchlaß 13 hineinragen. Die streifenförmigen Ansätze 9 an der Außenwand 7 ragen dem gegenüber nach außen.

Der Deckel 17 ist mit einer zentralen Öffnung 18 versehen, die durch einen Innenrand 21 begrenzt ist, an den streifenförmige Bereiche 22 anschließen. Der Deckel 17 weist einen Außenrand 19 auf, an den sich ebenfalls streifenförmige Bereiche 20 anschließen. Bevor die ringförmige vieleckige Wanne 1 und der Dekkel 17 miteinander verbunden werden, müssen die streifenförmigen Bereiche 20 und 22 mit den streifenförmigen Ansätzen 9 und 12 zur Deckung kommen.

Diese Situation ist deutlich der Fig. 1c zu entnehmen, die auch den viereckigen Querschnitt 14 der ringförmigen vieleckigen Wanne 1 zeigt, die mit Fleischfabrikat 26 gefüllt ist, welches eine Füllung für Brühwürste oder Siedewürste, Brät oder Fleisch- bzw. Leberkäse sein kann. Fig. 1c zeigt auch, daß die vieleckige ringförmige Wanne 1 mit einer Schicht aus Antihaftmaterial (28) versehen sein kann, um ein Herauslösen des Fleischfabrikates 26 aus der Wanne 1 zu erleichtern.

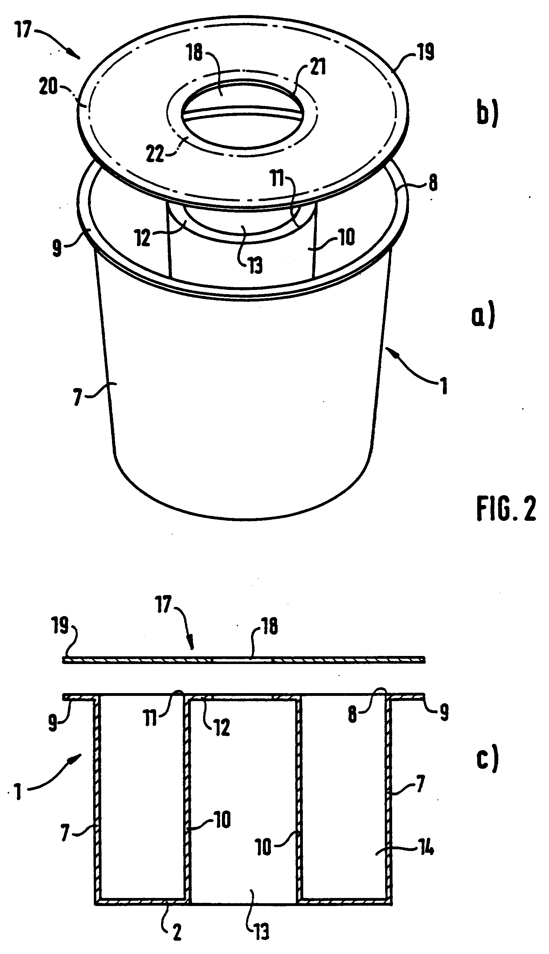

Fig. 2a, 2b und 2c zeigen ein zweites Ausführungsbeispiel der Erfindung mit einer kreisringförmigen Wanne 3, die ebenfalls einen ringförmigen ebenen Boden 2 besitzt. An die Außenwand 7, insbesondere an deren oberen Rand 8 schließt sich ein kreisringförmiger Ansatz 9 an. Der zentrale Durchlaß 13 ist durch eine Innenwand 10 begrenzt, an derem oberen Rand 11 ein streifenförmiger Ansatz 12 angeordnet ist, der in den zentralen Durchlaß 13 hineinragt.

Der Deckel 17 ist ein flacher, ebener Kreisring, an dessen Außenrand 19 sich nach innen hin ein streifenförmiger Bereich 20 anschließt. An den Innenrand 21 schließt sich ein streifenförmiger Bereich 22 an. Die streifenförmigen Ansätze 9 und 12 kommen beim Zusammenfügen der kreisringförmigen Wanne 3 mit dem Deckel 17 zur Deckung mit den streifenförmigen Bereichen 20 und 22.

Diese Konstellation ist in Fig. 2c dargestellt, die auch zeigt, daß die kreisringförmige Wanne 3 einen viereckigen Querschnitt 14 aufweist. Das Fleischfabrikat 26 sowie die Schicht aus Antihaftmaterial 28 ist in Fig. 2 nicht dargestellt.

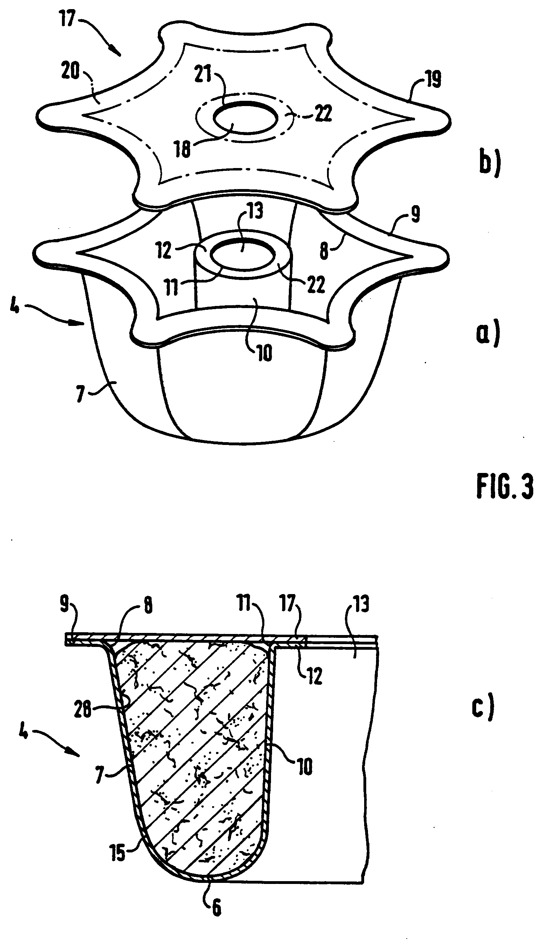

Die Fig. 3a, 3b und 3c zeigen in perspektivischer Ansicht ein bevorzugtes Ausführungsbeispiel der Erfindung. Die ringförmige Wanne 4 ist gugelhupfförmig ausgebildet. Sie weist eine entsprechend ausgebildete Außenwand 7 und eine Innenwand 10 auf. An den oberen Rändern 8 bzw. 11 sind streifenförmige Ansätze 9 bzw. 12 vorgesehen. Die Innenwand 10 umschließt einen zentralen Durchlaß 13.

Gemäß Fig. 3a weist der Deckel 17 den gleichen Grundriß auf, wie der obere Bereich der ringförmigen gugelhupfförmigen Wanne 4. An den Außenrand 19 schließt sich ein streifenförmiger Bereich 20 an, wohingegen an den Innenrand 21 ein streifenförmiger Bereich 22 angrenzt. Gemäß Fig. 3c sind vor dem Zusammenfügen der ringförmigen Wanne 4 mit dem Deckel 17 die streifenförmigen Ansätze 9 und 12 in Deckung mit den streifenförmigen Bereichen 20 und 22.

Fig. 3c zeigt weiterhin, daß die ringförmige gugelhupfförmige Wanne 4 einen nach außen gewölbten Boden 6 aufweist.

Die in Fig. 3 dargestellte gugelhupfförmige Form ist lediglich eine Möglichkeit der Gestaltung der ringförmigen Wanne 4. Ohne am Kern der Erfindung etwas zu ändern, kann die Wanne 4 jede gugelhupfförmige Form erhalten.

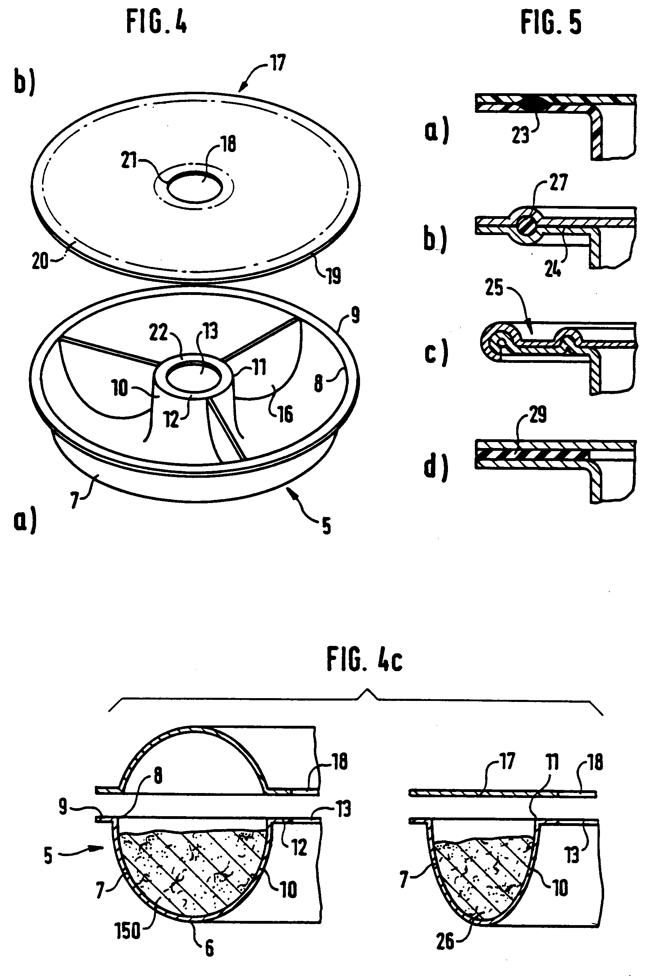

Fig. 4 zeigt ein Ausführungsbeipiel mit einer ringförmigen napfkuchenförmigen Wanne 5. Diese Wanne 5 weist ebenfalls einen nach außen gewölbten Boden 6 auf. Vergleichbare Merkmale in den Fig. 1 bis 4 sind mit gleichen Positionsziffern versehen. Besonders bemerkenswert sind bei dem Ausführungsbeispiel nach Fig. 4 die Querwände 16, die den Innenraum der kreisringförmigen Wanne 5 z. B. portionsweise unterteilen, aber auch der Umhüllung eine gute Stabilität verleihen.

In Fig. 3c ist der gugelhupfförmige Querschnitt mit 15 bezeichnet, wohingegen in Fig. 4c der napfkuchenartige Querschnitt mit 150 bezeichnet ist.

In Fig. 5a bis d sind beispielsweise Möglichkeiten einer dichten Verbindung zwischen den streifenförmigen Ansätzen 9 und 12 und den streifenförmigen Bereichen 20 und 22 dargestellt. Fig. 5a zeigt eine Schweißnaht 23, die eingesetzt werden kann , wenn die ringförmige Wanne 1, 3, 4, 5 und der Deckel 17 aus thermoplastischem Kunststoff bestehen.

Fig. 5b zeigt die Verbindung der streifenförmigen Ansätze 9, 12 und der streifenförmigen Bereiche 20, 22 mittels einer Klebeschicht 24. In Fig. 5b ist auch ein Aufreißband 27 angedeutet, welches zwischen den zusammengeklebten Teilen des Deckels und der ringförmigen Wanne liegt. Ein Ende dieses Aufreißbandes ragt aus dem Rand der Umhüllung heraus. Um diese Umhüllung zu öffnen, zieht der Verbraucher an diesem Band, wodurch sich die Klebe- bzw. Schweißverbindung bzw. die in Fig. 5c dargestellte mechanische Verbindung löst. In den Fig. 5a und 5c ist der Einfachheit wegen das Aufreißband 27 nicht dargestellt.

Die mechanische Verbindung 25 gemäß Fig. 5c ist nur beispielsweise dargestellt. Es kann jede mechanische Verbindung zum Einsatz kommen.

Die ringförmige Wanne und der zugehörige Deckel können aus allen gängigen Materialien, wie beispielsweise Kunststoff, Aluminium und auch Pergamentpapier bestehen. Die Wahl des jeweils geeigneten Materials richtet sich nach der Art des zu konservierenden Fleischfabrikates der beabsichtigten Dauer der Lagerung bzw. der Menge des Fleischfabrikates.

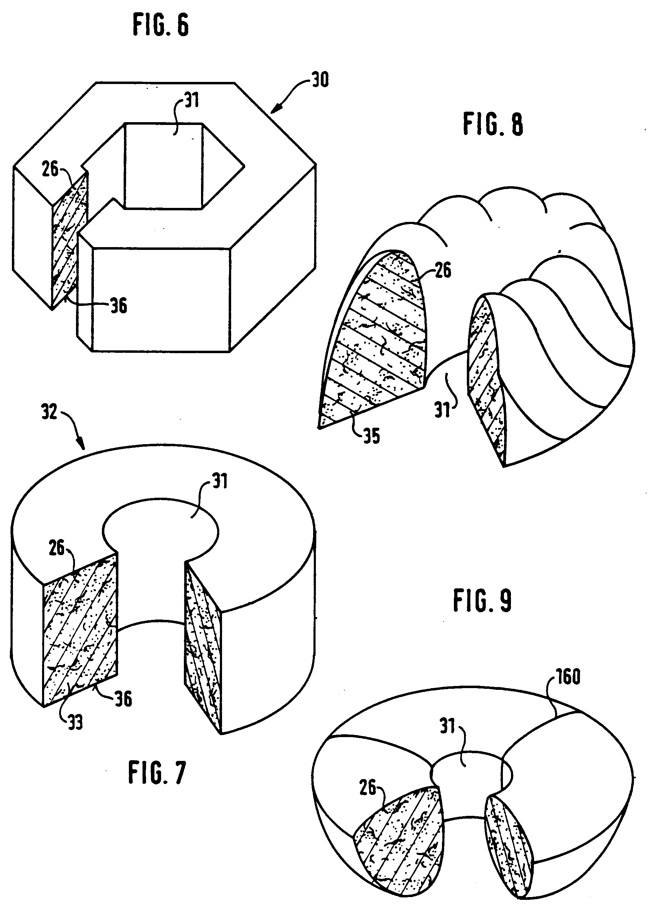

In den Fig. 6 bis 9 sind die in den entsprechenden Umhüllungen nach den Fig. 1 bis 4 gegarten und durch diese Umhüllungen geformten Fleischfabrikate 26 dargestellt. Fig. 6 zeigt ein Fleischfabrikat als vieleckigen Ring 30 mit einem zentralen Durchlaß 31 und viereckigem Querschnitt 33.

Fig. 8 zeigt ein Fleischfabrikat 26 mit zentralem Durchlaß 31 und einer gugelhupfartigen Querschnittsform 35.

Fig. 9 schließlich zeigt ein Fleischfabrikat 26 mit napfkuchenartigem Querschnitt 34 und einem zentralen Durchlaß 31. Im Fleischfabrikat 26 sind noch die Spuren 160 der Querwände 16 erkennbar, durch welche das Fleischfabrikat 26 portionsweise unterteilt ist.

Als Fleischfabrikat können auch die Inhalte von Kochwurst, Rohwurst (Rindersalami) oder auch Pasteten verwendet werden.

Von Vorteil ist es, wenn Wanne 1, 3, 4, 5 und Deckel 17 aus feuerfestem Glas bestehen und wenn zur Abdichtung zwischen Deckel 17 und Wanne 1, 3, 4, 5 Gummiringe 29 wie bei üblichen Einweckgläsern verwendet werden.

Die Fleischfabrikate in der Form nach der Erfindung können in Form von Vollkonserven mit einer Haltbarkeit von zwei Jahren ohne Kühlung in den erfindungsgemäßen Formen gelagert werden.

Ohne am Kern der Erfindung etwas zu ändern, lassen sich auch Halbkonserven mit einer dreimonatigen Haltbarkeit in gekühltem Zustand herstellen.

Von Vorteil ist, wenn die Umhüllungen so dimensioniert werden, daß sie Füllmengen von 250g, 800g bzw. 1,5 kg aufnehmen. In bevorzugten Ausführungsbeispielen werden die Wannen der Umhüllungen randvoll gefüllt. Wegen des hohen Preises einer Umhüllung aus beispielsweise Jenaer-Glas empfiehlt es sich, diese für größere Füllmengen auszulegen, beispielsweise für 2,5 kg. Derartige Umhüllungen sind wieder verwendbar. Sie eignen sich gut für den Gebrauch in Hotels, zu Veranstaltungen, in der Werbung bzw. in Restaurants. Die Umhüllungen aus durchsichtigem wärmebeständigem Glas brauchen nicht randvoll gefüllt zu werden. Die Inhalte dieser Umhüllungen brauchen meist nur etwa 4 wochen haltbar zu sein.

Die Vorteile der erfindungsgemäßen ringförmigen Umhüllung für die Wärmebehandlung eines Fleischfabrikates ergeben sich auch, wenn die Garung in einer Ringform, z.B. Gugelhufform ohne Deckel erfolgt, und diese Form dann mit ihrem gegarten Inhalt - ohne Deckel - in eine Aluminiumform unter Vakuum eingeschlossen wird. Die Haltbarkeit - gekühlt - beträgt dann etwa 1 bis 3 Monate. Unabhängig davon, welche der genannten Fleischfabrikate in

einer der erfindungsgemäßen Umhüllungen gegart wird, stellt sich stets der Vorteil ein, daß die Garungszeit einer bestimmten Menge Fleischfabrikat in einer ringförmigen Umhüllung kürzer ist ald die Garungszeit der gleichen Menge in Quaderform. Durch den inneren Durchlaß der erfindungsgemäßen Umhüllungen gelangt Garungswasser ungehindert an den inneren Bereich des Fleischfabrikates.

Ein weiterer Vorteil liegt darin, daß die erfindungsgemäß gegarten Fleischfabrikate in Ring- oder Gugelhupfform ein gefälliges Aussehen aufweisen und sich appetitlich darbieten lassen.

Von Vorteil ist, wenn die Umhüllungen beispielsweise aus wärmefestem Glas, als wiederverwendbare Umhüllungen zur Garung und zur Aufbewahrung der Fleischprodukte verwendet werden.

### Liste der verwendeten Bezeichnungen

- 1: ringförmige Wanne, vieleckig
- 2: ebener Boden
- 3: ringförmige Wanne, kreisringförmig
- 4: ringförmige Wanne, gugelhupfförmig
- 5: ringförmige Wanne, napfkuchenförmig
- 6: nach außen gewölbter Boden
- 7: Außenwand
- 8: oberer Rand
- 9: streifenförmiger Ansatz
- 10: Innenwand
- 11: oberer Rand
- 12: streifenförmiger Ansatz
- 13: zentraler Durchlaß
- 14: viereckiger Querschnitt
- 15: gugelhupfförmiger Querschnitt
- 150: napfkuchenartiger Querschnitt
- 16: Querwand
- 17: Deckel
- 18: Zentralöffnung
- 19: Außenrand
- 20: streifenförmiger Bereich
- 21: Innenrand
- 22: streifenförmiger Bereich
- 23: Schweißnaht
- 24: Klebeschicht
- 25: mechanische Verbindung
- 26: Fleischfabrikat
- 27: Aufreißband
- 28: Antihaftmaterial
- 29: Gummiring
- 30: eckiger Ring
- 31: zentraler Durchlaß
- 32: Kreisring
- 33: viereckiger Querschnitt
- 34: napfkuchenartiger Querschnitt
- 35: gugelh/upfartiger Querschnitt
- 36: ebene untere Kreisringfläche
- 160: Spur einer Querwand 16

## Patentansprüche

1. Umhüllung für ohne Konservierung leicht verderbliche Fleischfabrikate wie Füllungen für Brüh- oder Siedewürste bzw. Brät oder Fleisch- bzw. Leberkäse,
dadurch gekennzeichnet,
daß sie als um einen zentralen Durchlaß (13) herum angeordnete ringförmige Wanne (1, 3, 4, 5) mit einem entsprechend geformten Deckel (17) mit einer Zentralöffnung (18) ausgebildet ist, und daß der Deckel (17) mit den oberen Rändern (8, 11) der Wände (7, 10) der ringförmigen Wanne (1, 3, 4, 5) dicht verbunden ist.

2. Umhüllung nach Anspruch 1, dadurch gekennzeichnet, daß am Außenrand (19) des Deckels (17) sowie am Innenrand (21) seiner Zentralöffnung (18) streifenförmige Bereiche (20, 22) und an den oberen Rändern (8, 11) der Wände (7, 10) der ringförmigen Wanne (1, 3, 4, 5) entsprechende streifenförmige Ansätze (9, 12) zum dichten Verbinden vorgesehen sind.

3. Umhüllung nach den Ansprüchen 1 und 2, dadurch gekennzeichnet, daß die streifenförmigen Bereiche (20, 22) am Deckel (17) und die streifenförmigen Ansätze (9, 12) an den oberen Rändern (8, 11) der Wände (7, 10) der ringförmigen Wanne (1, 3, 4, 5) mittels einer Klebeschicht (24) oder thermisch miteinander verbunden, vorzugsweise mittels einer Schweißnaht verschweißt sind.

4. Umhüllung nach den Ansprüchen 1 und 2, dadurch gekennzeichnet, daß die streifenförmigen Bereiche (20, 22) am Deckel (17) und die streifenförmigen Ansätze (9, 12) an den oberen Rändern 88, 11) der Wände (7, 10) der ringförmigen Wanne (1, 3, 4, 5) mittels einer mechanischen Verbindung (25) miteinander verbunden sind.

5. Umhüllung nach den Ansprüchen 1 bis 4, dadurch gekennzeichnet, daß die ringförmige Wanne (1) und der Deckel (17) vieleckig ausgebildet sind.

6. Umhüllung nach den Ansprüchen 1 bis 4, dadurch gekennzeichnet, daß die ringförmige Wanne (3) und der Deckel (17) kreisringförmig ausgebildet sind.

7. Umhüllung nach den Ansprüchen 1 bis 6, dadurch gekennzeichnet, daß der Querschnitt (14) der ringförmigen Wanne (1, 3) viereckig und der Deckel (17) flach ausgebildet sind.

8. Umhüllung nach den Ansprüchen 1 bis 6, dadurch gekennzeichnet, daß der Boden (6) der ringförmigen Wanne (4, 5) nach außen gewölbt und der Deckel (17) flach ausgebildet sind.

9. Umhüllung nach den Ansprüchen 1 bis 4, dadurch gekennzeichnet, daß die ringförmige Wanne (4) gugelhupfförmig (15) und der Deckel (17) flach ausgebildet sind.

10. Umhüllung nach den Ansprüchen 1 bis 9, dadurch gekennzeichnet, daß die ringförmige Wanne (1, 3, 4, 5) und der Deckel (17) aus Kunststoff bestehen.

11. Umhüllung nach den Ansprüchen 1 bis 9, dadurch gekennzeichnet, daß die ringförmige Wanne (1, 3, 4, 5) und der Deckel (17) aus Aluminium bestehen.

12. Umhüllung nach den Ansprüchen 1 bis 9, dadurch gekennzeichnet, daß die ringförmige Wanne (1, 3, 4, 5) und der Deckel (17) aus Pergamentpapier bestehen.

13. Umhüllung nach den Ansprüchen 1 bis 12, dadurch gekennzeichnet, daß die ringförmige Wanne (1, 3, 4, 5) durch Querwände (16) unterteilt ist.

14. Umhüllung nach den Ansprüchen 1 bis 13, dadurch gekennzeichnet, daß sie mit einem Aufreißband (27) kombiniert ist.

15. Umhüllung nach den Ansprüchen 1 bis 14, dadurch gekennzeichnet, daß die Innenflächen der ringförmigen Wanne (1, 3, 4, 5) mit einem Antihaftmaterial (28) beschichtet sind.

16. Umhüllung nach den Ansprüchen 1 bis 15, dadurch gekennzeichnet, daß das Aufreißband (27) zwischen den miteinander verbundenen streifenförmigen Bereichen (20, 22) am Deckel (17) und den entsprechenden streifenförmigen Ansätzen (9, 12) an den Seitenwänden (7, 10) der ringförmigen Wanne (1, 3, 4, 5) angeordnet ist.

17. Umhüllung nach einem oder mehreren der Ansprüche 1 bis 16, dadurch gekennzeichnet, daß die ringförmige Wanne (1, 3, 4, 5) und der entsprechende Deckel (17) aus wärmebeständigem Glas bestehen und daß zur Abdichtung zwischen den Wannenrändern und den Rändern des ringförmigen Deckels Gummiringe (29) verwendet werden.

18. Umhüllung nach einem oder mehreren der Ansprüche 1 bis 16, dadurch gekennzeichnet, daß die ringförmige Wanne (1, 3, 4, 5) ohne Deckel (17) mit dem gegarten Fleischfabrikat (26) unter Vakuum an eine Umhüllung aus Aluminiumfolie oder dgl. angeschlossen ist.

19. Durch eine Umhüllung nach den Ansprüchen 1 bis 18, geformtes ohne Konservierung leicht verderbliches Fleischfabrikat wie Füllungen für Brüh- oder Siedewürste bzw. Brät oder Fleisch- bzw. Leberkäse, dadurch gekennzeichnet, daß es als Ring (30, 32) um einen zentralen Durchlaß (31) herum ausgebildet ist.

20. Geformtes Fleischfabrikat nach Anspruch 19, dadurch gekennzeichnet, daß der Ring (30) vieleckig ausgebildet ist.

21. Geformtes Fleischfabrikat nach Anspruch 19, dadurch gekennzeichnet, daß der Ring als Kreisring (32) ausgebildet ist.

22. Geformtes Fleischfabrikat nach den Ansprüchen 1 bis 21, dadurch gekennzeichnet, daß der Ring (30, 32) viereckigen Querschnitt (33) aufweist.

23. Geformtes Fleischfabrikat nach den Ansprüchen 17 bis 22, dadurch gekennzeichnet, daß der Ring (30, 32) eine ebene untere Kreisringfläche (36) und einen napfkuchenartigen Querschnitt (34) bzw. einen gugelhupfartigen Querschnitt (35) aufweist.
